# EUROPEAN PATENT APPLICATION

(11) **EP 2 648 205 A2**
(43) Date of publication of application: **09.10.2013**
(21) Application number: 11845718.3
(22) Date of filing: 29.11.2011
(51) Int. Cl.: H01J 1/30, H01J 9/02

(54) **FIELD EMISSION DISPLAY DEVICE AND MANUFACTURING METHOD THEREOF**

(30) Priority: 01.12.2010 KR 20100121469; 22.03.2011 KR 20110025131; 19.05.2011 KR 20110047395; 18.11.2011 KR 20110120642
(71) Applicant: SN Display Co., Ltd., Seoul 135-744 (KR)
(72) Inventor: LEE, Choonrae, Seoul 158-879 (KR); KIM, Hakwoong, Seoul 135-512 (KR)
(74) Representative: Cabinet Plasseraud
(86) International application number: PCT/KR2011/009156
(87) International publication number: WO 2012/074271

(57) **Abstract**

A field emission display (FED) and a fabrication method thereof are disclosed. A lower plate of the FED includes: a cathode electrode formed on the substrate; a diffusion blocking layer formed on the cathode electrode; a seed metal layer formed on the diffusion blocking layer; carbon nano-tubes (CNTs) grown as single crystals from the grains of the seed metal layer; a gate insulating layer formed on the substrate on which the cathode electrode, the diffusion blocking layer, and the seed metal layer are formed, in order to cover the CNTs; and a gate electrode formed on the gate insulating layer.

## Description

This application claims the benefit of Korea Patent Application No. 10-2010-0121469 filed on December 01, 2010, Korea Patent Application No. 10-2011-0025131 filed on March 22, 2011, Korea Patent Application No. 10-2011-0047395 filed on May 19, 2011, and 10-2011-0120642 filed on November 18, 2011, the entire contents of which is incorporated herein by reference for all purposes as if fully set forth herein.

### BACKGROUND

### Field

This document relates to a field emission display device including carbon nano-tube (CNT) acting as a field emitter, and a fabrication method thereof.

### Related Art

In a field emission display (FED), an electric field is formed between electron field emitters arranged at regular intervals on a cathode electrode and a gate electrode to control emission of electrons from the field emitters, and as the emitted electrons collide with a phosphor material on an anode electrode, an image is displayed.

A carbon nano-tube (CNT), having a very low work function and sharp structure, has been discussed as field emitters of a field emission display. CNT synthesizing methods include arc-discharge, laser vaporization, pyrolysis, and the like; however, these methods include complicated refining process to obtain high purity after synthesizing CNT and have difficulty in structure controlling and vertical growth. Recently, chemical vapor deposition (CVD) capable of synthesizing CNT in homeotropic alignment has been developed. The CVD may be classified into thermal CVD, DC plasma CVD, RF plasma CVD, and microwave plasma CVD. With the CVD methods known so far, it is difficult to synthesize CNT to have a stable structure at a temperature lower than 600°C, so CNT having a stable structure cannot be grown on a low-priced glass substrate largely used in displays.

### SUMMARY

An aspect of the present invention provides a field emission display and a fabrication method thereof capable of stably vertically growing CNTs having a single crystalline structure at a low temperature and lowering a threshold voltage allowing electrons to be emitted from CNTs.

In an aspect, a field emission display (FED) includes an upper plate including an anode electrode and a phosphor formed on an upper substrate, a lower plate facing the upper plate with a vacuum space gap interposed therebetween and including a plurality of thin film patterns formed on a lower substrate, and a spacer disposed between the upper plate and the lower plate to maintain the vacuum space gap.

The lower plate may include: a cathode electrode including one or more of metals among molybdenum (Mo), aluminum (Al), copper (Cu), chromium (Cr), and an alloy thereof and formed on the substrate; a diffusion blocking layer including any one or a mixture of titanium (Ti), tungsten (W), and tantalum (Ta), an alloy thereof, silicon, and a silicon compound and formed on the cathode electrode; a seed metal layer formed on the diffusion blocking layer by using any one of nickel (Ni) and iron (Fe) and including granulated grains; carbon nano-tubes (CNTs) grown as single crystals from the grains of the seed metal layer; a gate insulating layer formed on the substrate on which the cathode electrode, the diffusion blocking layer, and the seed metal layer are formed, in order to cover the CNTs; and a gate electrode including one or more metals among molybdenum (Mo), aluminum (Al), copper (Cu), chromium (Cr), and an alloy thereof and formed on the gate insulating layer. Upper ends of the CNTs may be exposed through gate holes in the gate electrode.

A method for fabricating the lower plate include: forming a cathode electrode including one or more of metals among molybdenum (Mo), aluminum (Al), copper (Cu), chromium (Cr), and an alloy thereof on the substrate and patterning the cathode electrode; forming a diffusion blocking layer including any one or a mixture of titanium (Ti), tungsten (W), and tantalum (Ta), an alloy thereof, silicon, and a silicon compound and formed on the cathode electrode, and forming a seed metal layer including any one of nickel (Ni) and iron (Fe) on the diffusion blocking layer; patterning the diffusion blocking layer and the seed metal layer; inputting the substrate including the cathode electrode, the diffusion blocking layer, and the seed metal layer into a chamber of DC PECVD equipment, heating the substrate to have a temperature ranging from 350°C to 600°C, and applying plasma energy ranging from 2W/cm³ to 40 W/cm³ to the interior of the chamber to form granulated grains on the seed metal layer; supplying a CNT synthesis raw material gas including hydrocarbon and a dry etching reactive gas including at least any one of ammonia (NH₃), carbon tetrachloride (CCl₄), tetrafluoremethane (CF₄), and nitrogen trifluoride (NF₃) to the interior of the chamber in a state in which the substrate is maintained at the temperature ranging from 350°C to 600°C and the plasma energy within the chamber is maintained at a level ranging from 2W/cm³ to 40W/cm³, to grow CNTs as single crystals on the grains of the seed metal layer; forming a gate insulating layer including any one of an organic insulating material and an inorganic insulating material on the substrate on which the cathode electrode, the diffusion blocking layer, and the seed metal layer are formed, to bury the CNTs therein; and forming a gate electrode including one or more of metals among molybdenum (Mo), aluminum (Al), copper (Cu), chromium (Cr), and an alloy thereof on the gate insulating layer, and patterning the gate electrode to form gate holes exposing uppermost ends of the CNTs.

### BRIEF DESCRIPTION OF THE DRAWINGS

The accompany drawings, which are included to provide a further understanding of the invention and are incorporated on and constitute a part of this specification illustrate embodiments of the invention and together with the description serve to explain the principles of the invention.

FIG. 1 is a sectional view schematically showing DC PECVD equipment.

FIG. 2 is a flow chart illustrating a sequential process of a method for synthesizing CNT according to an embodiment of the present invention.

FIG. 3 is a flow chart illustrating a sequential process of a method for synthesizing CNT according to another embodiment of the present invention.

FIGS. 4A to 4C are sectional views sequentially showing a process of growing CNTs.

FIG. 5 is a perspective view showing an example in which single crystalline CNTs are grown to have a cylindrical structure.

FIG. 6 is a perspective view showing an example in which single crystalline CNTs are grown to have a conical structure.

FIG. 7 is a plan view showing a portion of an electrode structure of a lower plate in a field emission display (FED) according to an embodiment of the present invention.

FIG. 8 is a sectional view showing a sectional structure of an FED according to a first embodiment of the present invention taken along line I-I' in FIG. 7.

FIGS. 9A to 9F are sectional views sequentially showing a method for fabricating a lower plate illustrated in FIG. 8.

FIGS. 10A to 10C are sectional views showing a method for growing CNTs in a state in which a photoresist layer remains on a seed metal layer in the method for fabricating a lower plate of the FED illustrated in FIG. 8.

FIG. 11 is a sectional a sectional view showing a sectional structure of a lower plate of an FED according to a second embodiment of the present invention taken along line I-I' in FIG. 7.

FIGS. 12A to 12F are sectional views sequentially showing a method for fabricating the lower plate of the FED illustrated in FIG. 11.

FIGS. 13A to 13C are sectional views showing a method for growing CNTs in a state in which a photoresist layer remains on a seed metal layer in the method for fabricating a lower plate of the FED illustrated in FIG. 11.

FIGS. 14 and 15 are scanning electron microscope (SEM) images of single crystalline CNTs grown to have a conical structure according to experiment results of the method for synthesizing CNTs illustrated in FIG. 3.

FIG. 16 is a sectional view showing an upper plate, a lower plate, and a spacer in FIG. 15.

FIG. 17 is an exploded perspective view showing the upper plate, the lower plate, and the spacer in FIG. 16.

FIGS. 18A to 18C are plan views showing various structures of spacers according to an embodiment of the present invention.

FIGS. 19A and 19B are views showing exhaust paths formed in the spacer according to an embodiment of the present invention.

FIG. 20 is a flow chart illustrating a method for fabricating a spacer according to an embodiment of the present invention.

FIG. 21 is a sectional view showing a method for fabricating a spacer illustrated in FIG. 20.

FIG. 22 is a sectional view showing an example of an anisotropic wet etching method to which the spacer fabrication method according to an embodiment of the present invention can be applicable.

FIG. 23 is a view showing an apparatus for processing the anisotropic wet etching method illustrated in FIG. 22.

### DETAILED DESCRIPTION

Embodiments of the present invention will be described with reference to the accompanying drawings, in which like numbers refer to like elements throughout. In describing the present invention, if a detailed explanation for a related known function or construction is considered to unnecessarily divert the gist of the present invention, such explanation has been omitted but would be understood by those skilled in the art.

In an embodiment of the present invention, carbon nano-tubes (CNTs) can be vertically grown by using DC PECVD obtained by modifying PECVD equipment employed in TFT LCD production line. Meanwhile, when CNTs are grown according to an existing RF PECVD process, the polarity of electric field is periodically reversed within a chamber. As a result, when CNTs are grown according to the existing RF PECVD process, CNTs are grown in a spiral or twisted form, rather than being grown to be straight, so a threshold voltage is increased and electron emission efficiency is degraded.

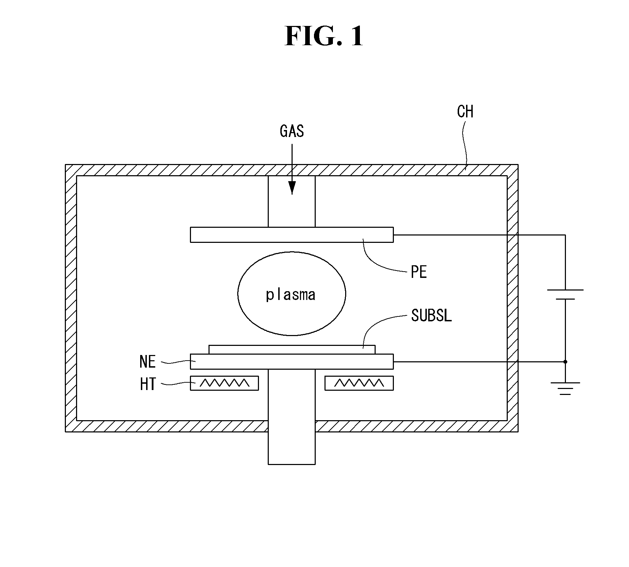

In an embodiment of the present invention, CNTs are grown on any one of a glass substrate, a plastic substrate, and a metal substrate at a temperature of 600°C or lower by using DC PECVD equipment. The DC PECVD equipment as shown in FIG. 1. The DC PECVD equipment includes a positive electrode PE and a negative electrode NE for applying a DC field within a chamber CH, a heater HT for increasing temperature, a reaction gas supply unit for injecting a reaction gas, and the like. A substrate SUBSL is placed on the negative electrode plate NE.

In the DC PECVD equipment, a current is supplied to the heater HT to heat the substrate SUBSL at a temperature ranging from 350°C to 600°C, and a DC field is applied under the atmosphere of thermal energy to generate plasma energy within the chamber CH. In the DC PECVD equipment, after a seed metal formed on the substrate SUBSL is crystallized by heating the substrate SUBSL, a hydrocarbon-based CNT synthesis raw material gas and a dry etching reactive gas for dry-etching polycrystalline/amorphous carbon residue (or soot) are alternately supplied or the both gases are simultaneously supplied into the chamber CH to grow CNTs having a single crystalline structure vertically on the substrate SUBSL.

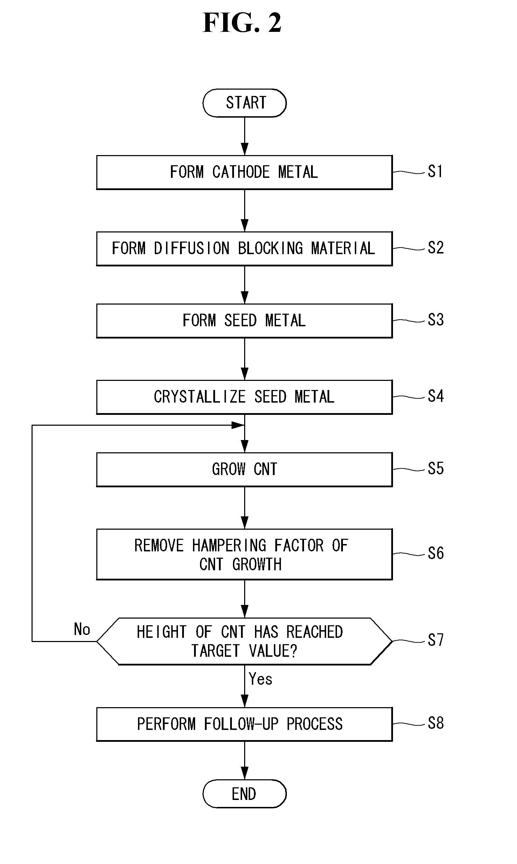

The method for synthesizing such CNTs will be described in detail with reference to FIGS. 2 to 4C.

FIG. 2 is a flow chart illustrating a sequential process of a method for synthesizing CNT according to an embodiment of the present invention.

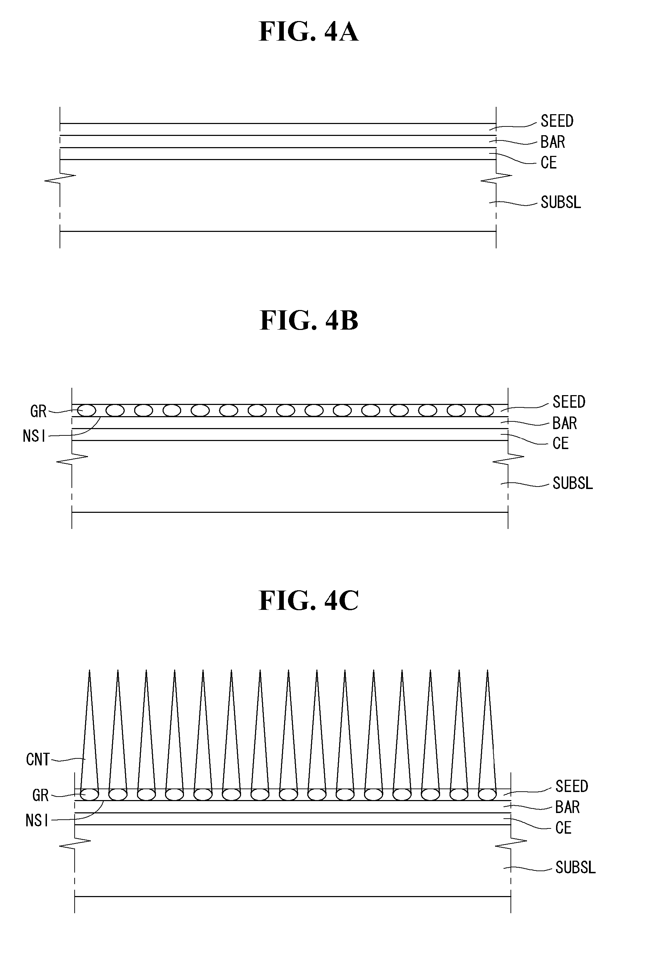

With reference to FIGS. 2 and 4A to 4C, in the present embodiment, as shown in FIG. 4C, a cathode metal CE is deposited on the substrate SUBSL and then patterned to form a cathode electrode CE on the substrate SUBSL. Thereafter, a diffusion blocking material and a seed metal are sequentially formed and then collectively patterned to form a diffusion blocking layer (or a barrier metal) BAR and a seed metal layer SEED (S1 to S3). Here, since the diffusion blocking material and the seed metal are collectively patterned, steps S2 and S3 in FIG. 2 are substantially simultaneously performed.

As the substrate SUBSL, any one of a glass substrate, a plastic substrate, and a metal substrate which can be fabricated to have a large area at low costs may be selected. A cathode metal may include one or more among molybdenum (Mo), aluminum (Al), copper (Cu), chromium (Cr), and an alloy thereof, and may be formed to have a thickness range from 1000Å to 4000Å on the substrate SUBSL. The seed metal may include one or more among nickel (Ni), iron (Fe), and an alloy thereof, and may be formed to have a thickness ranging from 50Å to 400Å on the diffusion blocking material.

The diffusion blocking material is formed between the cathode metal and the seed metal and includes a metal, e.g., one or more of metals among titanium (Ti), tungsten (W), and tantalum (Ta), an alloy thereof, silicon, and a silicon compound to which the seed metal does not diffuse. Here, the diffusion blocking material is formed to have a thickness ranging from about 400Å to 4000Å on the cathode metal. When silicon or a silicon compound is used as a diffusion blocking material, the diffusion blocking material may appropriately have a thickness ranging from about 400Å to 2000Å. Meanwhile, when the seed metal is directly in contact with the cathode metal without the diffusion blocking material therebetween, atoms of the seed metal diffuse to the cathode metal to lengthen the time duration of the process of growing CNTs. Then, the seed metal may barely remain.

In the fabrication method according to the present embodiment, in order to grow CNTs on the substrate SUBSL at a temperature of 600°C or lower, the substrate is heated to have a certain temperature to crystallize the cathode metal, and then, a hydrocarbon-based CNT synthesis raw material gas such as C₂H₂, C₄H₄, CₓH_{y}, or the like, is supplied to the interior of the chamber to vertically grow a CNT bundle having a single crystalline structure on the seed metal layer SEED (S4). The CNT bundle refers to a plurality of CNTs clustered together. As described hereinafter, a gate insulating layer is buried in the CNT bundle to increase a permittivity value to lower a threshold value allowing for electron emission, in comparison to the related art.

In an embodiment of the present invention, in order to grow CNTs on the substrate SUBSL at the temperature of 600°C or lower, a dry etching reactive gas including at least any one of ammonia (NH₃), carbon tetrachloride (CCl₄), tetrafluoremethane (CF₄), and nitrogen trifluoride (NF₃) generated in depositing the CNTs having a single crystalline structure and a CNT synthesis raw material gas are alternately supplied to remove polycrystalline/amorphous carbon residue (S5∼S7).

Step S4 is a process of granulating the seed metal layer SEED. In step S4, a current is supplied to the heater HT and in a state in which a substrate temperature is maintained at a level ranging from 350°C to 600°C, a DC field is applied to the interior of the chamber CH to apply plasma energy at a level ranging from 2W/cm³ ∼ 40 W/cm³ to the interior of the chamber CH. In step S4, the CNT synthesis raw material gas is not supplied to the interior of the chamber CH. In step S4, grains GR, from which CNTs can be grown as a single crystal, respectively, are formed on the seed metal layer SEED in a recrystallization process as shown in FIG. 4B. The grains GR are adjacent with a grain boundary interposed therebetween. The surface of the grains has a molecular structure that can be well coupled with the carbon atoms.

In step S5, the CNT synthesis raw material gas is supplied to the DC PECVD equipment. Carbon atoms of the CNT synthesis raw material gas decomposed by plasma energy are deposited on the grains GS of the seed metal layer SEED. As a results, in step S5, CNTs having a single crystalline structure are vertically grown from the grains GR of the seed metal layer SEED. At the same time, although not intended, carbon atoms are inevitably mismatched with the atoms of the seed metal layer SEED on the seed metal layer SEED in the process to generate polycrystalline or amorphous carbon residue deposited on the seed metal layer SEED. Such polycrystalline or amorphous carbon residue acts as a factor hampering the single crystalline CNTs from growing at a temperature of 600°C or lower. Thus, in an embodiment of the present invention, the CNT synthesis raw material gas and the dry etching reactive gas are alternately supplied with a certain time difference to the DC PECVD equipment to alternately perform the carbon atom deposition process and the dry etching process (S5 and S6). For example, the carbon atom deposition process and the dry etching process may be alternately performed at time intervals of about 10 seconds.

The substrate temperature at steps S4 to S7 is maintained at a temperature level ranging from 350°C to 600°C, and the plasma energy within the chamber CH is maintained to ranging from 2W/cm³ ∼ 40 W/cm³. If the plasma energy is higher than 40 W/cm³, an arc discharge occurs, and when the plasma energy is lower than 2W/cm³, carbon atoms may not be well decomposed in the CNT synthesis raw material gas and particles generated due to cohesion of the CNT synthesis raw material gas may remain on the substrate.

In the dry etching process in step S6, the polycrystalline/amorphous carbon residue having a weak interatomic force compared with the single crystalline CNTs deposited on the grains GR of the seed metal layer SEED is more easily decomposed by the dry etching reactive gas and exhausted to the outside, and the single crystalline CNTs remain on the seed metal layer SEED.

Steps S5 and S6 are repeatedly performed until when the height of the CNTs grown as single crystals reaches a desired target value (S5 to S7). When the single crystalline CNTs are grown by the target value, a follow-up process is performed.

As described above, in the CNT synthesizing method according to the present embodiment, by performing the process of granulating the seed metal in step S4 and the dry etching process for removing the polycrystalline/amorphous carbon residue in step S6, the CNTs having a single crystalline structure can be vertically grown at the temperature of 600°C.

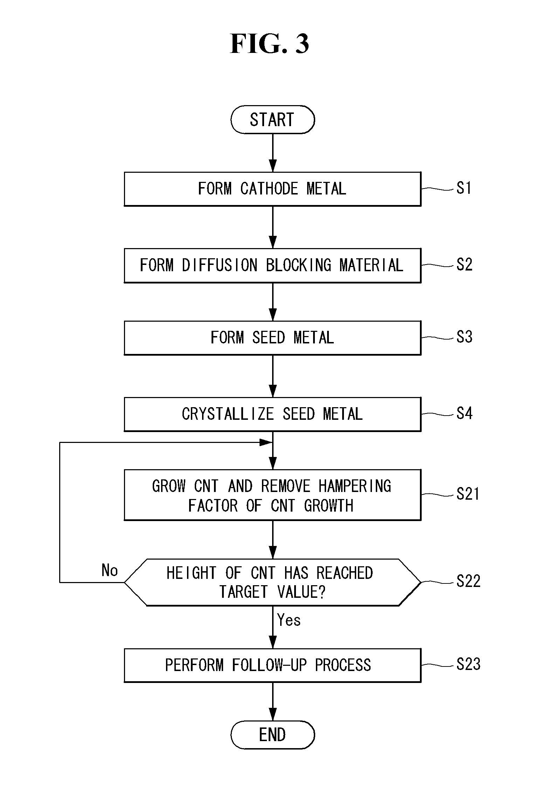

FIG. 3 is a flow chart illustrating a sequential process of a method for synthesizing CNT according to a second embodiment of the present invention. Steps S1 to S4 in the CNT synthesizing method according to the second embodiment of the present invention are substantially the same as those of the first embodiment described above, so a detailed description thereof will be omitted.

In the CNT synthesizing method according to the second embodiment, the CNT synthesis raw material gas and the dry etching reactive gas are simultaneously input to the chamber CH of the DC PECVD equipment in step S21 after step S4. In steps S4 to S44, a substrate temperature is maintained at a level ranging from 350°C to 600°C, and plasma energy within the chamber CH is maintained at a level ranging from 2W/cm³ ∼ 40W/cm³.

In step S21, as the CNT synthesis raw material gas is decomposed by plasma energy, carbon atoms are deposited on the grains GR of the seed metal layer SEED and, at the same time, the polycrystalline/amorphous carbon impurity deposited on the seed metal layer SEED is reacted to the dry etching reactive gas so as to be decomposed and exhausted to the outside. The process of step S21 is continuously performed until when the height of the CNTs grown as single crystals reaches a desired target value (S21 and S22). When the single crystalline CNTs are grown by the target value, a follow-up process is performed.

In the CNT synthesizing method according to the second embodiment of the present invention, since growing of the single crystalline CNTs and removing of the polycrystalline/amorphous carbon residue are simultaneously performed in step S21 and S22, a processing time can be shortened in comparison to the foregoing first embodiment.

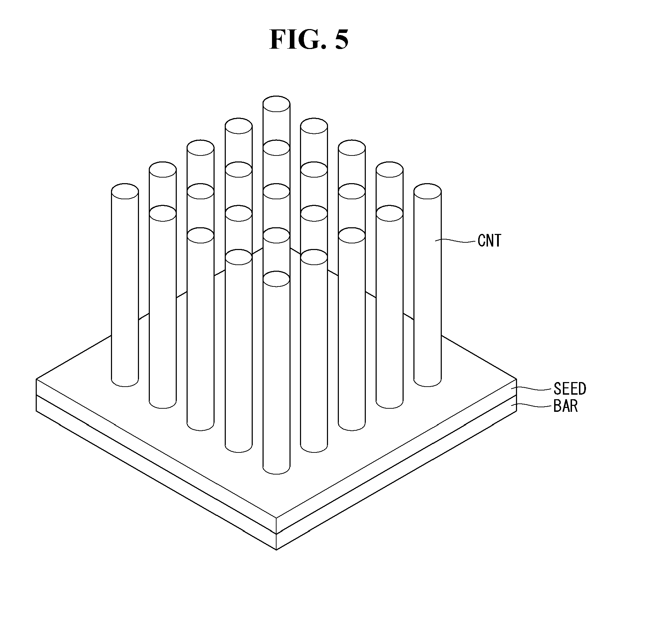

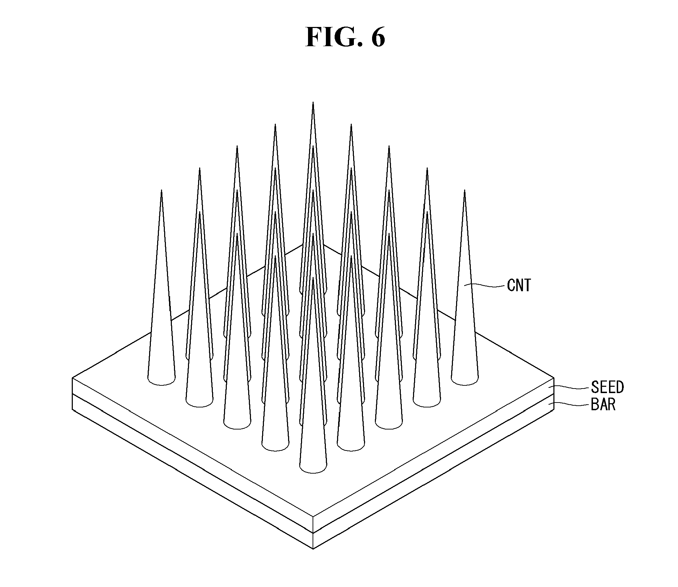

When silicon or a silicon compound is used in the diffusion blocking layer BAR, a nickel layer is formed as the seed metal layer SEED and step S4 is performed in each of the first and second embodiments, nickel is reacted to the underlying silicon to form a nickelsilicide (NSI) is formed on the seed metal layer SEED as shown in FIG. 4C. Grains GR of the nickelsilicide NSI layer acts as a seed of the single crystalline CNTs. When single crystalline CNTS are grown from the nickelsilicide NSI, the single crystalline CNTS are vertically grown from the seed metal layer SEED to have a conical structure as shown in FIG. 5. When the single crystalline CNTs are grown to have a conical structure, electrons can be emitted even at a relatively low voltage, thereby enhancing electron emission efficiency and lowering the threshold value for emitting electrons in comparison to the cylindrical CNTs. When titanium (Ti), tungsten (W), and tantalum (Ta) is used as a material of the diffusion blocking layer BAR, rather than silicon, the CNTs having a single crystalline structure are grown to have a cylindrical structure as shown In FIG. 6. Thus, when the electron emission efficiency and threshold voltage are considered, silicon or a silicon compound is preferred as a material of the diffusion blocking layer BAR. Meanwhile, any of titanium (Ti), tungsten (W), tantalum (Ta), silicon, and a silicon compound can be applied as the diffusion blocking layer BAR to prevent a phenomenon in which the seed metal is diffused to the cathode metal, so it should be appreciated that the diffusion blocking layer BAR is not limited to silicon or a silicon compound.

A method for fabricating a lower plate of an FED including a follow-up process (step S8 in FIG. 2 and step S23 in FIG. 3) after the growth of CNTs will be described. A lower plate structure of the FED according to an embodiment of the present invention includes CNTs formed according to the foregoing CNT synthesizing method and is implemented to have various structures.

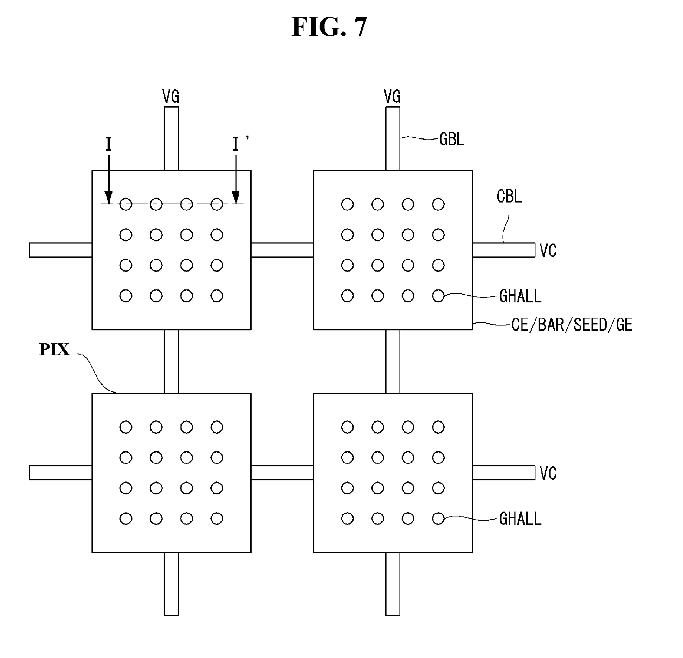

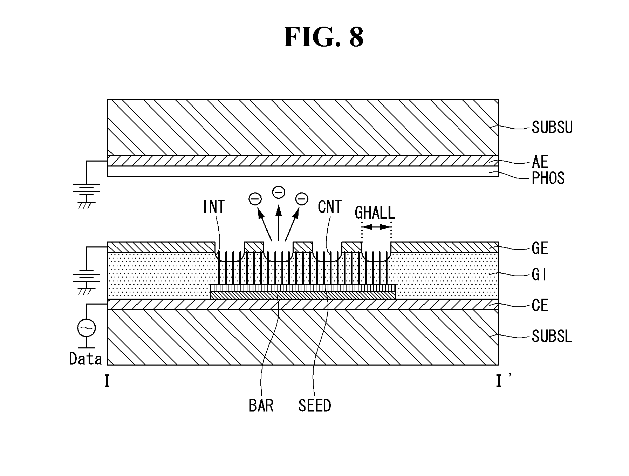

FIG. 7 is a plan view showing a portion of an electrode structure of a lower plate in a field emission display (FED) according to an embodiment of the present invention. FIG. 8 is a sectional view showing a sectional structure taken along line I-I' in FIG. 7.

With reference to FIGS. 7 and 8, the FED according to an embodiment of the present invention includes an upper plate and a lower plate facing with an electron emission space ESP in a vacuum state therebetween. The upper plate and the lower plate are airtightly sealed with a sealant with the electron emission space ESP interposed therebetween. The degree of vacuum of the electron emission space ESP may range approximately from 10⁻⁵ to 10⁻⁷ torr.

Within a pixel region PIX, a plurality of gate holes GHALL exist, and a CNT bundle including a plurality of CNTs is formed in each of the gate holes GHALL. Thus, even if some CNTs have a problem within the pixel region PIX, pixel deficiency rarely occurs, enhancing a production yield and reliability of driving.

The upper plate includes an anode electrode AE formed on an upper substrate SUBSU and a phosphor PHOS covering the anode electrode AE. A voltage of about 4kV to 12kV is applied to the anode electrode AE. The structure of the upper plate and a fabrication method thereof are substantially the same as those of the existing FED, so a detailed description thereof will be omitted. Hereinafter, a structure of the lower plate and a fabrication method thereof will be described.

A lower plate includes a cathode electrode CE, a diffusion blocking layer BAR, a seed metal layer SEED, CNTs, a gate insulating layer GI, a gate electrode GE, and the like, stacked on a lower substrate SUBSL. The upper substrate SUBSU and the lower substrate SUBSL may be implemented as any one of a glass substrate, a ceramic substrate, a plastic substrate, and a metal substrate which can be easily fabricated to have a large area at low costs.

The cathode electrodes CE and cathode bus lines CBL connecting the cathode electrodes CE are formed on the lower substrate SUBSL, and include one or more of molybdenum (Mo), aluminum (Al), copper (Cu), chromium (Cr), and an alloy thereof. The seed metal layer SEED includes any one of nickel (NI) and iron (Fe). The diffusion blocking layer BAR is formed between the cathode electrode CE and the seed metal layer SEEED and includes one or more of metals, e.g., titanium (Ti), tungsten (W), tantalum (Ta), silicon and a silicon compound, to which the seed metal does not diffuse.

The gate electrode GE is formed on an insulating layer GI. A gate bus line GBL connecting the gate electrode GE and the gate electrode GE includes one or more metals among molybdenum (MO), aluminum (Al), copper (Cu), chromium (Cr), and an alloy thereof, and is partially etched to form a gate hole GHALL. The cathode bus lines CBL and the gate bus lines GBL are perpendicular.

CNTs are vertically grown from the grains GR of the seed metal layer SEED through the foregoing CNT synthesizing method. The CNTs substantially have a single crystalline structure, and are vertically stood on the seed metal layer SEED. The CNTs emit electrons when a voltage difference Vgc between an anode voltage and a cathode voltage is greater than a threshold value Vth.

The gate insulating layer GI includes an inorganic insulating material or an organic insulating material available for spin coating or chemical vapor deposition. The gate insulating layer GI is formed between the cathode electrode CE and the gate electrode GE to insulate the electrodes CE and GE, and covers lower portions of the uppermost ends of the CNTs to lower a threshold voltage Vth for emitting electrons.

After the gate insulating layer GI is formed, the uppermost ends of the CNTs exposed from the gate insulating layer GI are cut to be equal to or lower than the surface of the gate insulating layer GI at the thickest portion of the gate insulating layer GI in height through dry etching, ashing, or the like.

After the gate electrode GE is formed, an upper surface of the gate insulating layer GI is etched by a certain depth within the gate hall GHALL from which the gate electrode GE has been removed. The certain depth may be set to be 20% to 60% of the thickness portion of the gate insulating layer GI. Accordingly, the upper ends of the CNTs are exposed within the gate hole GHALL of the gate insulating layer GI formed through an etching process.

Lower portions of the upper ends of the CNTs are covered by the gate insulating layer GI, so they are not exposed. When portions of the CNTs are buried in the gate insulating layer GI in this manner, an electron emission threshold value of the CNTs can be lowered. The reason is because, when the gate insulating layer GI covers the CNTs, permittivity of the portions where the CNT bundle is formed is increased to enhance a field strength applied to the CNTs. Thus, the portion where the CNT bundle is formed by the gate insulating layer GI covering the CNTs and a portion where the CNT bundle is not formed have substantially the same permittivity.

In detail, in the gate insulating layer GI, an average permittivity of the CNT bundle portion buried in the gate hall GHALL is substantially the same as that of the portion without CNT bundle in the vicinity of the CNT bundle. The gate insulating layer GI is selectively made of an organic/inorganic insulating material having permittivity of about 2 to 8. Thus, the permittivity of the portion where the CNT bundle is formed and that of the portion without the CNT bundle are substantially the same as about 2 to 8.

When the gate insulating layer GI is buried in the gate hall GHALL, a field strength applied between the upper plate and the lower plate is uniform at the portion with the CNT bundle and the portion without the CNT bundle, thus lowering a threshold voltage for electron emission. When the threshold voltage is lowered, an electrode for extracting electrons is not required. Thus, the gate electrode GS according to the present embodiment serves as a focusing electrode for focusing electron beams when a negative voltage is applied thereto, rather than being an electron extraction electrode. In the present embodiment, electrons are emitted and accelerated by the field between the cathode electrode and the anode electrode.

In the related art, the gate insulating layer GI is not formed in the gate hole GHALL. In this case, the permittivity (vacuum permittivity) of the portion where the CNT bundle is formed is lower than that (permittivity of the gate insulating layer) of the portion without the CNT bundle, so the field strength of the portion with the CNT bundle is lowered. Accordingly, in the related art, since the permittivity in the vicinity of the CNT bundle is high, a field is concentrated to the vicinity of the CNT bundle, causing a field distortion phenomenon. Thus, in the related art, due to the difference between the permittivity of the portion with the CNT bundle and that of the neighboring portion thereof, a threshold voltage for an electron emission is high, resulting in that a positive voltage is applied to the gate electrode to extract electrons from the field emitter with the field between the cathode electrode and the gate electrode, and then, the electrons are accelerated toward the anode electrode by the field applied between the cathode electrode and the anode electrode.

As described above, in the FED according to the present embodiment, since the electron beams toward the anode electrode AE can be focused by applying a negative voltage to the gate electrode GE, an additional focusing electrode is not required. The FED according to the present embodiment can control an amount of emitted electrons according to a data voltage of video data applied to the cathode electrode CE, to represent gray scales of an input image.

In the FED according to the present embodiment, the threshold voltage Vth is 3 V/µm or lower, and a saturation emission condition is met at a field of about 5 V/µm. When the interval between the anode electrode AE and the cathode electrode CE is set to range from 0.5 mm to 2 mm and a DC positive voltage (anode voltage) ranging from 4 to 12 kV is applied to the anode electrode AE, a field applied to the CNTs reaches the electron emission saturation region and phosphor PHOS emits light with the maximum brightness. A negative voltage of 0V or lower, e.g., a DC voltage ranging from -50V to 0V, for focusing electron beams is applied to the gate electrodes GE. A video data voltage (or a cathode voltage) which varies according to a gray scale value of input image data is applied to the cathode electrode CE. Thus, in the FED according to the present embodiment, the field applied to the CNTs is controlled by controlling the cathode voltage, and as a result, the gray scale of an input image can be represented by adjusting the brightness of the phosphor PHOS.

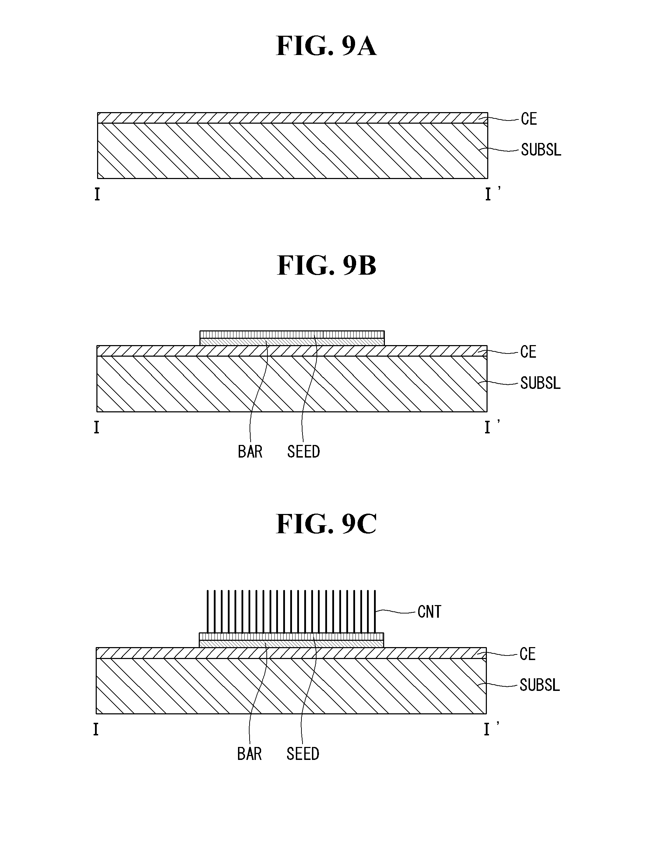

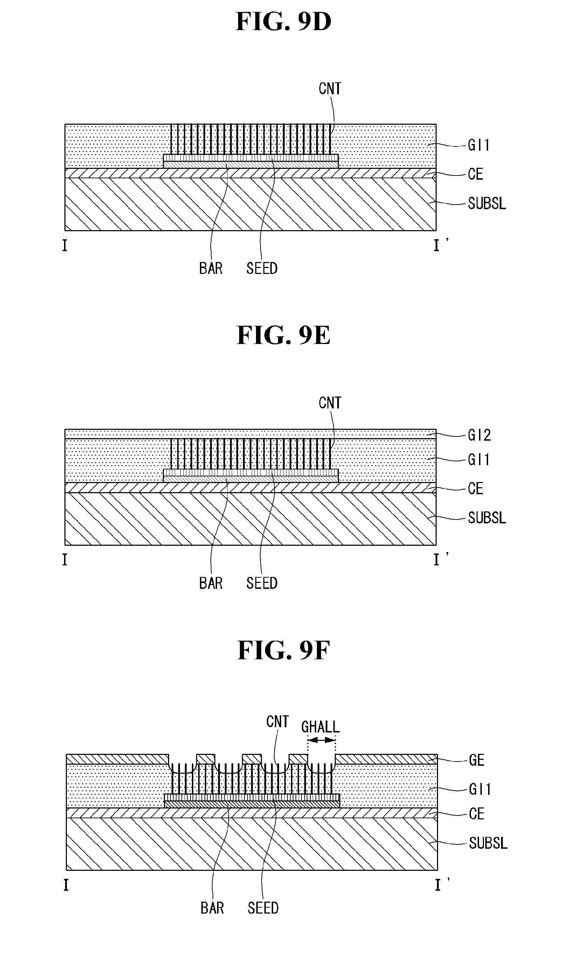

FIGS. 9A to 9F are sectional views sequentially showing a method for fabricating the lower plate illustrated in FIG. 8.

In an embodiment of the present invention, as shown in FIG. 9A, one or more of cathode metals among molybdenum (Mo), aluminum (Al), copper (Cu), chromium (Cr) and an alloy thereof are deposited to have a thickness ranging from 1000Å-4000Å on the lower substrate SUBSL by using a deposition process such as sputtering. Subsequently, in the present embodiment, photoresist PR is coated on the cathode metal and a first photolithograpny process including sequential processes of first photomask aligning, exposing, developing and etching is performed thereon to pattern a cathode electrode CE and a cathode bus line CBL. If the cathode metal is deposited to have a thickness smaller than 1000Å resistance of the cathode metal would be increased and the cathode metal may be disconnected in an etching process. Meanwhile, if the cathode metal is deposited to have a thickness greater than 4000Å, a deposition time is excessively consumed to lengthen a processing time and increase stress of the substrate.

Thereafter, in the present embodiment, one or more of diffusion blocking materials among titanium (Ti), tungsten (W), and tantalum (Ta), and a silicon compound are deposited to have a thickness ranging from 400Å to 4000Å by using a deposition process such as sputtering, and subsequently, nickel (Ni) or iron (Fe), a seed metal is deposited to have a thickness ranging from 50Å to 400Å. If the diffusion blocking material is deposited to have a thickness smaller than 400Å, the diffusion blocking material would be diffused into the cathode metal during the process, failing to serve as a diffusion blocking layer of the seed metal. Meanwhile, if the diffusion blocking metal is deposited to have a thickness greater than 4000Å, the flatness of the diffusion blocking layer would be degraded and a processing time would be excessively lengthened. If the seed metal is deposited to have a thickness smaller than 50Å, the seed metal would be diffused into the diffusion blocking layer and the cathode metal during the process, preventing the CNTs from being stably grown, and if the seed metal is deposited to have a thickness greater than 400Å, CNTs cannot be grown to have a desired diameter of a design value. Thereafter, in the present embodiment, the diffusion blocking layer BAR and the seed metal layer SEED are collectively patterned through a second photolithography process including sequential processes of coating of photoresist PR, aligning a second photomask, exposing, developing and etching to define the diffusion blocking layer BAR and the seed metal layer SEED within the pixel region PIX as shown in FIG. 9B. The patterned in which the diffusion blocking layer BAR and the seed metal layer SEED are stacked are formed in the pixel region PIX including the gate holes GHALL and the neighboring regions to be formed in a follow-up process.

Subsequently, in the present embodiment, the single crystalline CNTs are vertically grown from the grains GR of the seed metal layer until when the single crystalline CNTs have a height ranging from 2µm to 20µm by using the foregoing CNT synthesizing methods.

And then, in the present embodiment, in order to form a gate insulating layer GI, an insulating material is coated to have a certain thickness on the lower substrate SUBSL to cover the single crystalline CNTs. Here, an insulating material including an inorganic or organic insulating material such as silicon oxide, silicon nitride, acryl, or the like, may be formed to have a thickness ranging from 0.2µm to 10µm through spin coating, CVD, or the like, as an insulating material coating method. The insulating material may be hardened (or cured) through a hardening process.

Thereafter, in the present embodiment, in order to prevent the cathode electrode CE and the gate electrode GE from being short-circuit through the CNTs, as shown in FIG. 9D, the single crystalline CNTs protruded from a first gate insulating layer GI1 are completely removed by using O₂ plasma, dry etching, or ashing process.

In the present embodiment, an insulating material including an organic or inorganic insulating material such as silicon oxide, silicon nitride, acryl, or the like, is additionally coated to have a thickness ranging from 1000Å to 10 µm through spin coating or CVD on the first gate insulating layer GI1 to form a second gate insulating layer GI2. The process of additionally forming the second gate insulating layer GI2 may be omitted. Also, in different embodiments described hereinafter, the process of additionally forming the second gate insulating layer GI2 may be included.

Subsequently, one or more of gate metals among molybdenum (Mo), aluminum (Al), copper (Cu), chromium (Cr), and an alloy thereof are deposited to have a thickness ranging from 1000Å to 4000Å by using a deposition process such as sputtering to form a gate electrode GE on the gate insulating layers GI1 and GI2. Thereafter, in the present embodiment, in order to remove the gate electrode GE at the position where a gate hole GHALL is to be formed, the gate metal is patterned through a third photolithography process including sequential processes of coating photoresist PR, aligning a third photomask, exposing, developing, and etching to form the gate electrode GE and a gate hole GHALL. As a result, as shown in FIG. 9F, the gate insulating layer GI1 is exposed through a plurality of gate holes GHALL penetrating in the gate electrode GE.

Finally, in the present embodiment, as shown in FIG. 9F, upper ends of the gate insulating layer GI1 exposed through the gate holes GHALL are etched to have a thickness ranging from 0.1 µm to 5 µm by using the gate metal pattern as a mask to expose the upper ends of the CNTs in each of the gate holes GHALL. When the gate insulating layer GI1 has a thickness of about 0.2 µm in FIG. 9D, the upper end of the gate insulating layer GI1 is etched to have a depth of 0.1 µm or smaller within the gate hole GHALL. When the gate insulating layer GI1 has a thickness of about 10 µm in FIG. 9D, the upper end of the gate insulating layer GI1 is etched to have a depth of 5 µm or smaller within the gate hole GHALL. Thus, the upper end of the gate insulating layer GI1 is removed by a depth of 1/2 or smaller compared with the thickness of the gate insulating layer GI1 below the gate hole GHALL. If the gate insulating layer GI1 is etched to be excessively deeper in the gate hole GHALL, a threshold voltage would be increased.

As described above, the method for fabricating an FED according to the first embodiment of the present invention can complete the lower plate (or a cathode plate) of the FED only the photolithography process of three times.

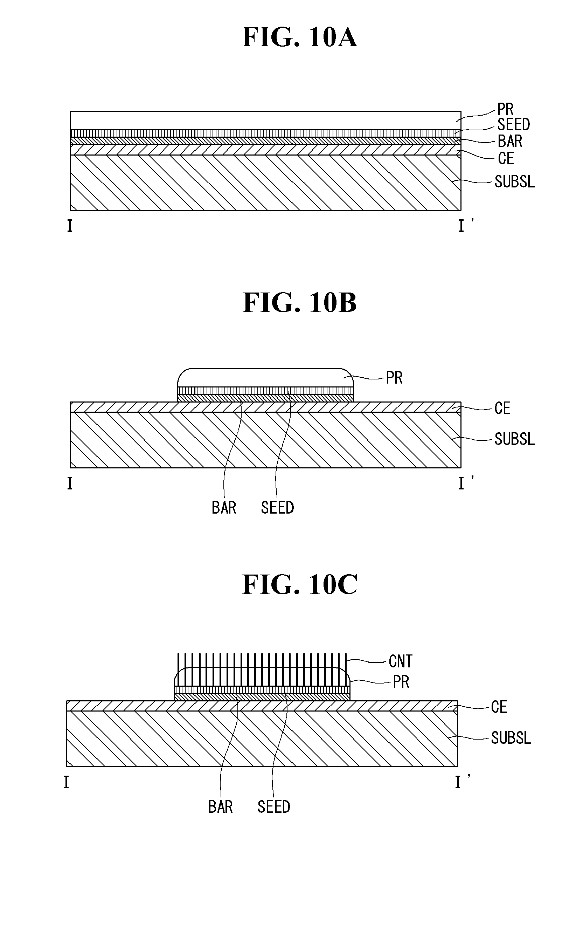

In the process of FIGS. 9B and 9C, the CNTs can be grown in a state in which the photoresist layer remains on the seed metal layer SEED. This method will be described in detail with reference to FIGS. 10A to 10C.

FIGS. 10A to 10C are sectional views showing a method for growing CNTs in a state in which the photoresist layer remains on the seed metal layer in the method for fabricating the lower plate of the FED illustrated in FIG. 8.

After the cathode metal deposited on the lower substrate SUBSL is patterned through the first photolithography process, as shown in FIG. 10A, a diffusion blocking material is deposited to have a thickness ranging from 400Å to 4000Å on the cathode electrode CE, and a seed metal is deposited to have a thickness ranging from 50Å to 400Å on the diffusion blocking material.

Thereafter, in the present embodiment, as shown in FIG. 10B, photoresist is coated on the seed metal layer SEED to form a photoresist pattern PR through a second photolithography process including sequential processes of aligning a second photomask, exposing, developing, and etching, and the other remaining portions, excluding the diffusion blocking layer BAR and the seed metal layer SEED under the photoresist pattern PR, are etched to define the diffusion blocking layer BAR and the seed metal layer SEED within a pixel region PIX. Here, the pattern of the diffusion blocking layer BAR and the seed metal layer SEED is formed as a single pattern within the pixel region PIX by the second photomask shape.

And then, in the present embodiment, as shown in FIG. 10C, in a state in which the photoresist pattern PR covers the seed metal layer SEED, single crystalline CNTs are vertically grown from the grains GR of the seed metal layer SEED by using the CNT synthesizing method as described above with reference to FIGS. 2 to 4C until when the single crystalline CNTs have a height ranging from 2µm to 20µm. Processes after the process of growing CNTs are substantially the same as those of FIGS. 9D to 9F, so a detailed description thereof will be omitted.

As shown in FIGS. 10A to 10C, when the DC PECVD process is applied in a state in which the photoresist pattern PR covers the seed metal layer SEED, the photoresist pattern PR is burnt at the processing temperature of the DC PECVD process, and in this case, since the carbon component of the photoresist PR acts as a growth catalyst of the CNTs, the growth temperature of the single crystalline CNTs can be further lowered and the growth speed can become faster. At a temperature ranging from 350°C to 600°C, other materials of the photoresist PR than carbon are decomposed and exhausted to the outside of the chamber of the DC PECVD.

In the method for fabricating a lower plate of an FED as shown in FIGS. 9A to 10C, the diffusion blocking layer BAR and the seed metal layer SEED are patterned by pixel region PIX, rather than by gate hole. As a result, the CNTs are grown from the entire surface within the pixel region and there is no need to align the gate hole GHALL with the CNT bundle.

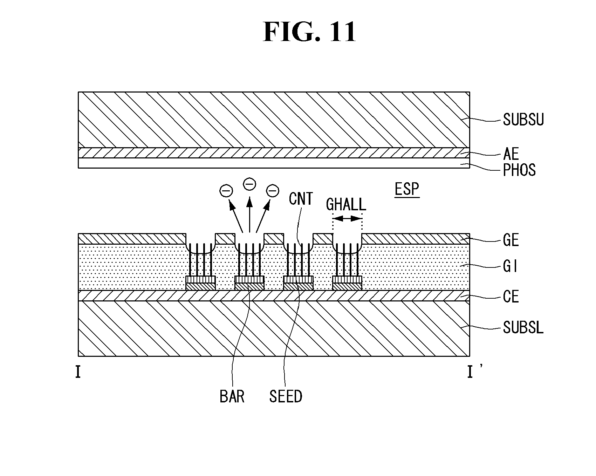

FIG. 11 is a sectional a sectional view showing a sectional structure of the lower plate of an FED according to a second embodiment of the present invention.

With reference to FIG. 11, in the FED according to the second embodiment of the present invention, the diffusion blocking layer BAR and the seed metal layer SEED are patterned such that they remain only in the gate holes GHALL. Other features are substantially the same as those of the foregoing first embodiment, so a detailed description thereof will be omitted.

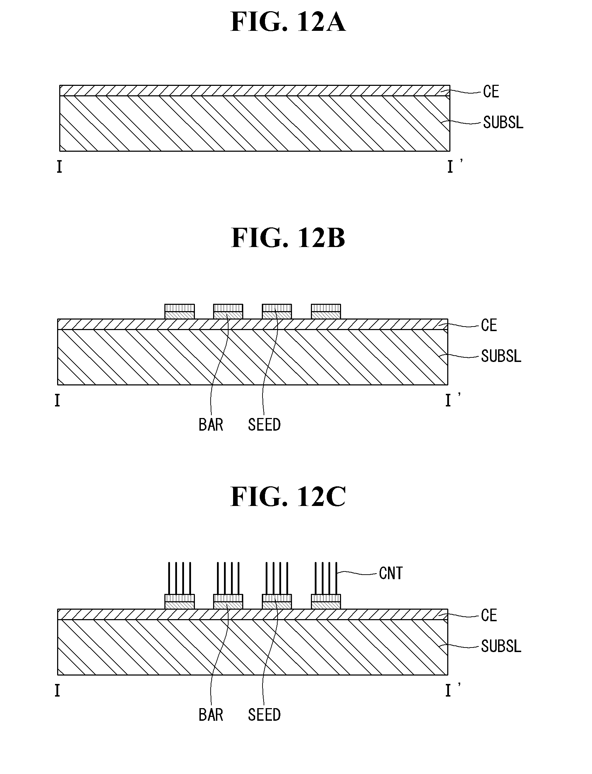

FIGS. 12A to 12F are sectional views sequentially showing a method for fabricating the lower plate of the FED illustrated in FIG. 11.

The FED and a fabrication method thereof according to the second embodiment of the present invention are substantially the same as those of the foregoing first embodiment of the present invention, except that the shape of a second photomask in the process of patterning the diffusion blocking layer BAR and the seed metal layer SEED is different.

As shown in FIG. 12A, one or more of cathode metals among molybdenum (Mo), aluminum (Al), copper (Cu), chromium (Cr) and an alloy thereof are deposited to have a thickness ranging from 1000Å∼4000Å on the lower substrate SUBSL, and a cathode electrode CE and a cathode bus line CBL are patterned through a first lithography process.

Thereafter, in the present embodiment, as shown in FIGS. 12B and 12C, one or more of diffusion blocking materials among titanium (Ti), tungsten (W), and tantalum (Ta), and a silicon compound are deposited to have a thickness ranging from 400Å to 4000Å, and subsequently, nickel (Ni) or iron (Fe), a seed metal is deposited to have a thickness ranging from 50Å to 400Å. Thereafter, in the present embodiment, the diffusion blocking layer BAR and the seed metal layer SEED are collectively patterned through a second photolithography process including sequential processes of coating of photoresist PR, aligning a second photomask, exposing, developing and etching In this patterning process, the diffusion blocking layer BAR and the seed metal layer SEED remain only in the gate holes GHALL and other remaining portions are removed. Accordingly, the pattern in which the diffusion blocking layer BAR and the seed metal layer SEED are stacked is formed only under each of the gate holes GHALL to be formed in a follow-up process.

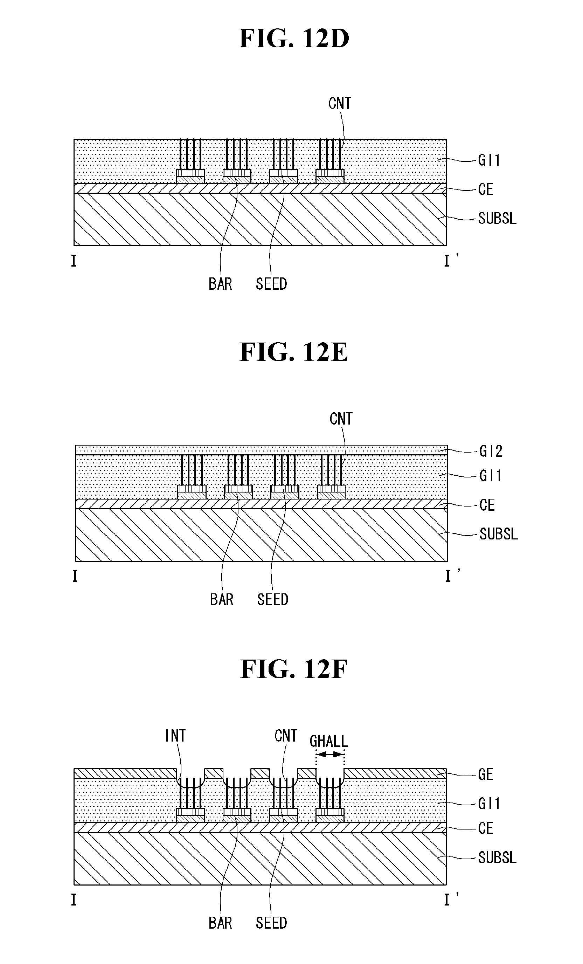

Subsequently, in the present embodiment, as shown in FIGS. 12D and 12E, the first gate insulating layer GI1 is formed, and as shown in FIG. 12F, single crystalline CNTs are vertically grown from the grains GR of the seed metal layer SEED by using the foregoing CNT synthesizing method. Here, the CNTs are grown only in the gate holes GHALL.

Finally, in the present embodiment, the gate metal is patterned by using a third photolithography process to form a gate electrode GE including the gate holes GHALL.

In the processes of FIGS. 12A to 12F, the lower plate of the FED can be completed only through the three times of photolithography.

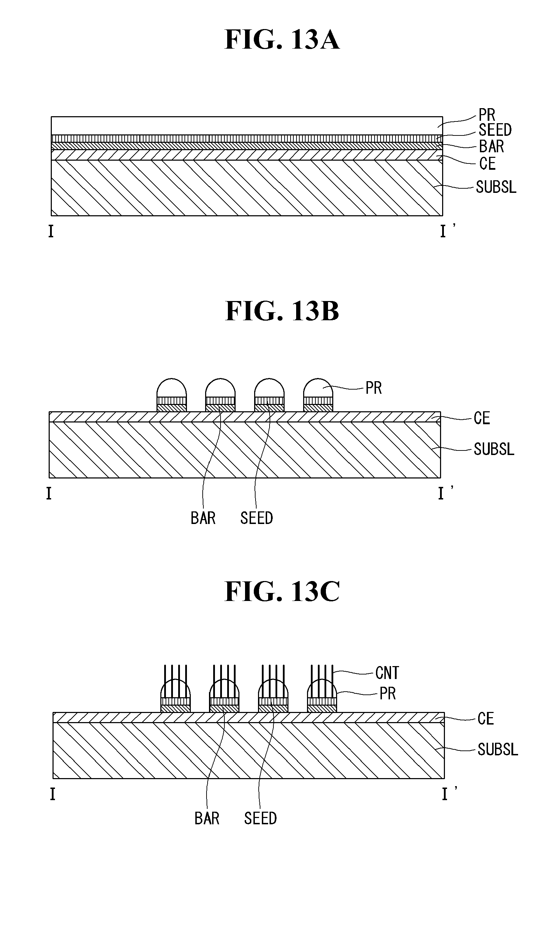

In the processes of FIGS. 12B and 12C, the CNTs can be grown in a state in which the photoresist layer remains on the seed metal layer SEED. This method will be described in detail with reference to FIGS. 13A to 13C.

FIGS. 13A to 13C are sectional views showing a method for growing CNTs in a state in which the photoresist layer remains on the seed metal layer in the method for fabricating a lower plate of the FED illustrated in FIG. 11. The remained PR could be working as a catalyst to enhance the growing of CNTs.

After the cathode metal deposited on the lower substrate SUBSL is patterned through the first photolithography process, as shown in FIG. 13A, a diffusion blocking material is deposited to have a thickness ranging from 400Å to 4000 Å on the cathode electrode CE, and a seed metal is deposited to have a thickness ranging from 50 Å to 400 Å on the diffusion blocking material. Thereafter, in the present embodiment, as shown in FIG. 13B, photoresist is coated on the seed metal layer SEED to form a photoresist pattern PR through a second photolithography process including sequential processes of aligning a second photomask, exposing, developing, and etching, and the other remaining diffusion blocking layer and the seed metal layer, excluding the diffusion blocking layer BAR and the seed metal layer SEED under the photoresist pattern PR, are etched to define the diffusion blocking layer BAR and the seed metal layer SEED within a pixel region PIX. Here, the pattern of the diffusion blocking layer BAR and the seed metal layer SEED remains only at the positions of gate holes to be formed in a follow-up process. Thus, the diffusion blocking layer and the seed metal layer are divided into a plurality of parts within the pixel region.

And then, in the present embodiment, as shown in FIG. 13C, in a state in which the photoresist pattern PR covers the seed metal layer SEED, single crystalline CNTs are vertically grown from the grains GR of the seed metal layer SEED by using the foregoing CNT synthesizing method until when the single crystalline CNTs have a height ranging from 2µm to 20µm. The CNTs are grown only in the gate holes GHALL to be formed in the follow-up process according to the pattern of the seed metal layer SEED. Processes after the process of growing CNTs are substantially the same as those of FIGS. 12D to 12F, so a detailed description thereof will be omitted.

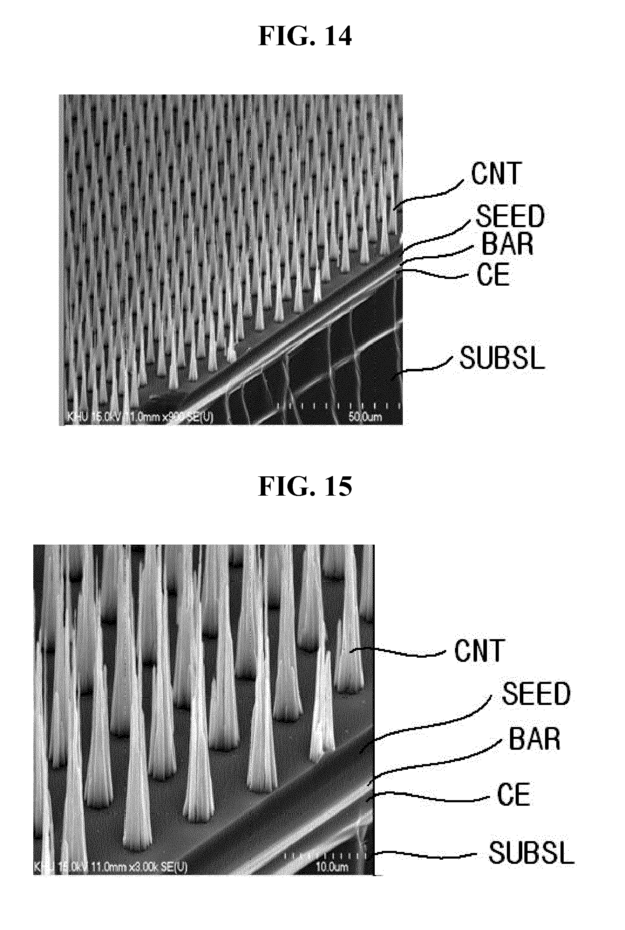

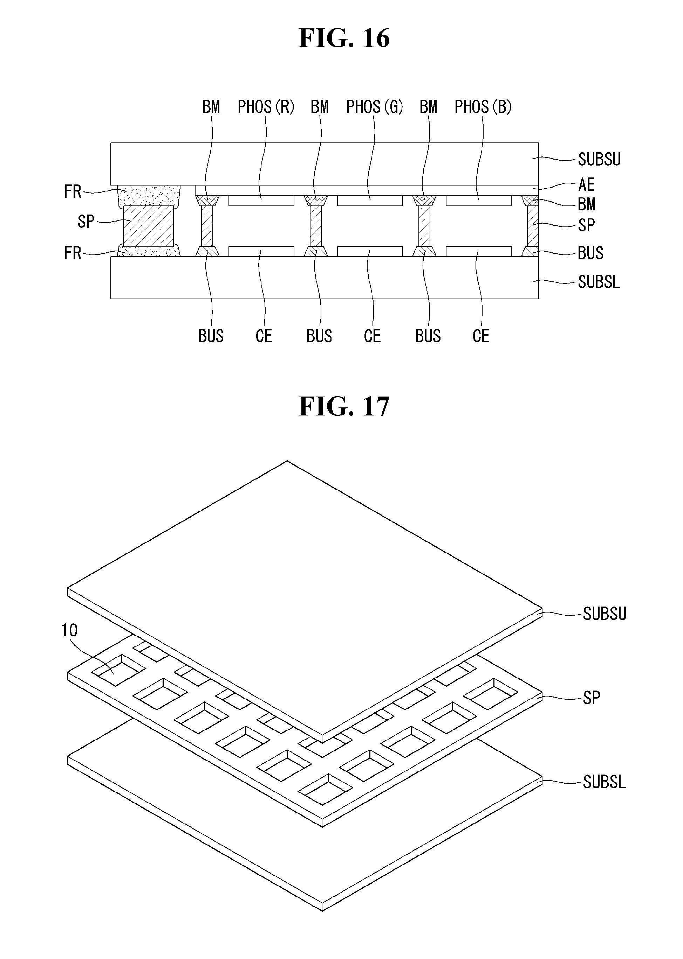

FIGS. 14 and 15 are scanning electron microscope (SEM) images of single crystal CNTs grown to have a conical structure according to experiment results of the method for synthesizing CNTs illustrated in FIG. 3. FIG. 16 is an enlarged view of a partial image of FIG. 15. A glass substrate from Samsung Corning Co., Ltd., which is widely used as a substrate for a TFT LCD, was selected as a substrate used in the experiment. In this experiment, in a state in which the photoresist PR remains on the structure including the cathode electrode CE, the diffusion blocking layer BAR including silicon Si, the seed metal layer SEED including nickel Ni, the gate insulating layer GI, and the like, hydrocarbon (C₄H₄) and dry etching reactive gas NH₃ were simultaneously supplied to the chamber of the DC PECVD. In this experiment, a substrate temperature was maintained at 550°C and DC plasma energy was set to be about 4W/cm³. The process time was about 10 minutes. As clearly noted from the experiment results, in the present embodiment, single crystalline CNTs having a conical structure were relatively quickly grown to have a desired height without any impurities at a temperature of 600°C or lower.

Through the methods for fabricating an FED according to embodiments of the present invention as described above, the lower plate of the FED can be fabricated by using equipment of the TFT LCD production line, so an FED can be manufactured through the TFT LCD production line without an additional investment in equipment.

As described above, in the present embodiment, since the CNT growing process is performed while removing the polycrystalline/amorphous carbons acting as a hampering factor of the single crystalline CNT, the polycrystalline CNTs can be stably grown even at the temperature of 600°C or lower.

In the present embodiment, since the CNTs are buried in the insulating layer, a threshold voltage can be lowered to emit electrons at a low voltage, and the electrons can be focused without using a focusing electrode by applying a negative voltage to the gate electrode. In addition, as shown in FIGS. 14 and 15, since the CNTs having a single crystalline structure are grown to have a conical shape which is sharpened toward the upper ends, the electron emission efficiency can be enhanced to further lower the threshold voltage.

According to the method for fabricating an FED according to an embodiment of the present invention, the lower plate of the FED can be fabricated through only three times of photo processes by using the equipment of the TFT LCD production line, drastically reducing equipment investment costs and lower plate fabrication costs, resulting in enhancement of mass-productivity of the FED to allow for mass-production.

A spacer has a structure for uniformly maintaining an electron emission space ESP formed as a vacuum space gap, which greatly affects performance and a life span of the FED. A spacer material should have a mechanical strengths as strong as enduring a pressure difference between an internal vacuum pressure of a display panel and an external atmospheric pressure of the display panel and should have a dielectric strength ensuring an anode voltage Also, the space should be fabricated to have a precise structure not intruding an effective aperture area in the pixels of the display panel and should have an appropriate volume resistance. Hereinafter, the space according to an embodiment of the present invention will be described in detail.

In FIGS. 16 and 17, the upper plate includes an anode electrode AE formed on the upper substrate SUBSU, phosphors (PHOS(R), PHOS(G), PHOS(B)) covering the anode electrode AE, black matrices BM, and the like. The lower plate includes cathode electrodes CE, a field emitter, and the like, formed on the lower plate SUBSL. The structure of the lower plate and a fabrication method thereof are substantially the same as those of the foregoing embodiment, so a detailed description thereof will be omitted.

The spacer SP is fabricated based on a glass substrate or a ceramic substrate and maintains a vacuum space gap between the upper plate and the lower plate. The spacer SP is patterned to have a mesh form in which openings 10 exposing the pixel regions PIX of the lower plate are disposed in a matrix form. The spacer SP may be bonded to the upper substrate SUBSU and the lower substrate SUBSL through glass frit FR. In the pixel array of the display panel, an upper face of a barrier rib of the spacer SP overlaps with the black matrix BM, and a lower face of the barrier rib of the spacer SP overlaps with a metal bus line BUS. The metal bus LINE bus includes the cathode bus line CBL and the gate bus line GBL as shown in FIG. 7.

In the present embodiment, the spacer SP is fabricated by processing a glass substrate or a ceramic substrate in a mesh form by using a photolithography process and an anisotropic etching process. The anisotropic etching method is commonly used in a microelectromechanical systems (MEMS) process. The glass substrate may be a glass substrate having a thickness of 0.7 mm widely used as a substrate of a flat display panel such as a TFT LCD. In this case, the upper substrate SUBSU, the lower substrate SUBSL and the spacer SP can be fabricated as glass or ceramic substrates each having the same material and the same thickness, so the common substrate material can be used. The ceramic substrate may be based on alumina (Al₂O₃).

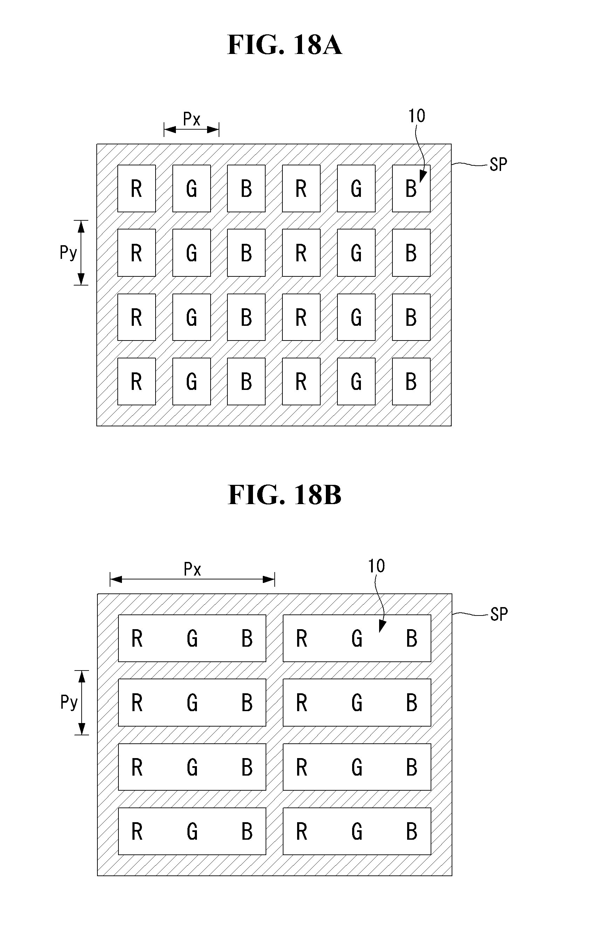

As shown in FIGS. 18A to 18C, the pixels of the FED may include red (R), green (G), and blue (B) subpixels. The spacer SP is fabricated to have a mesh structure in which the openings 10 are arranged in a matrix form. The openings 10 of the spacer SP are demarcated by a barrier rib interposed therebetween. The barrier rib of the spacer SP overlaps with the black matrix BM of the upper plate and the metal bus line BUS of the lower plate.

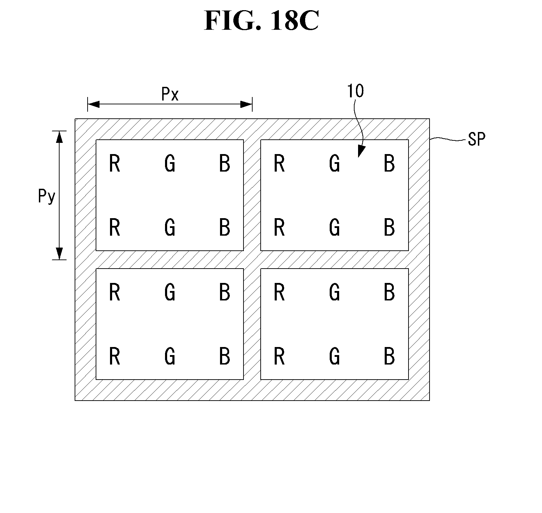

As shown in FIG. 18A, the openings 10 of the spacer SP are demarcated by subpixels (R, G, B). As shown in FIG. 18B, the openings 10 of the spacer SP may be demarcated by pixels including RGB subpixels. Px and Py denote horizontal pitch and vertical pitch, respectively. Also, as shown in FIG. 18C, the openings 10 of the spacer SP may be demarcated by two or more pixels.

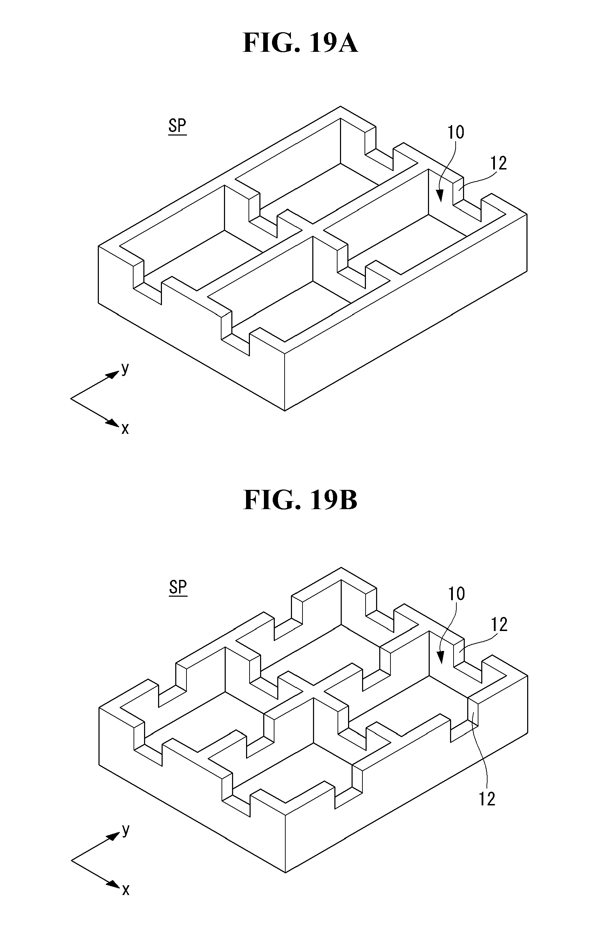

The process for fabricating the FED includes an exhaustion process of exhausting internal gas present between the upper plate and the lower plate after the upper plate and the lower plate are bonded to maintain an appropriate degree of vacuum within the display panel. In order for the internal gas to be smoothly exhausted in the exhaustion process, as shown in FIG. 19A, the spacer SP may include recesses 12 formed in the barrier ribs in both direction (x direction and y direction). The recesses 12 form an exhaustion path passing through the barrier ribs of the spacer in the exhaustion process. As shown in FIG. 19B, the recesses 12 may be formed in the barrier ribs in two directions (x and y directions) which are perpendicular.

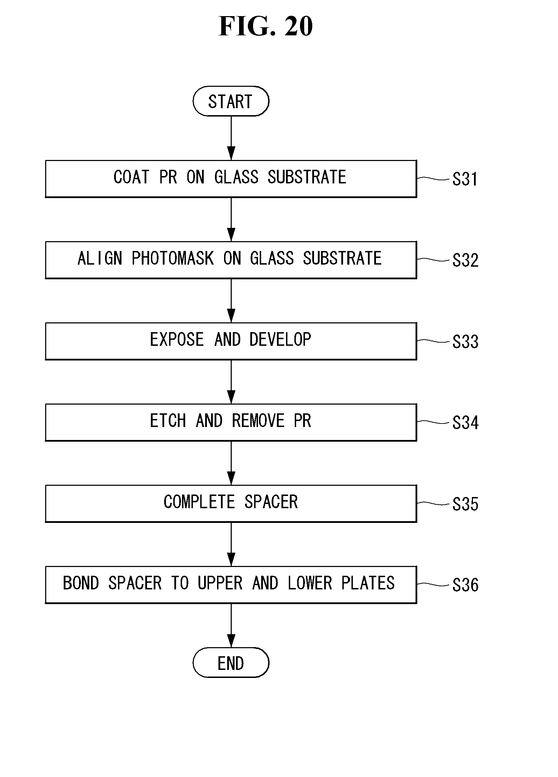

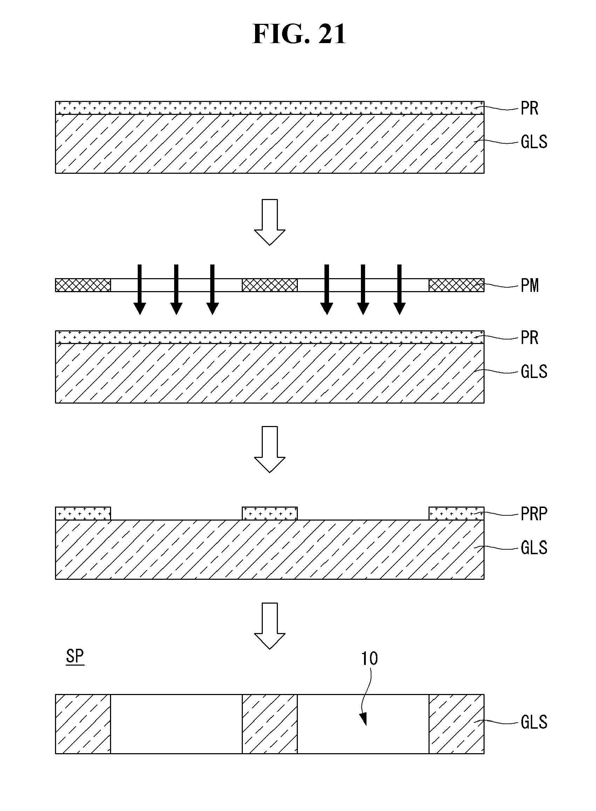

FIGS. 20 and 21 show a method for fabricating the spacer SP.

With reference to FIGS. 20 and 21, in the method for fabricating the spacer SP according to an embodiment of the present invention, phororesist PR is applied to a substrate GLS, on which a photomask PM is aligned (S31 and S32). The substrate GLS may be a glass substrate or a ceramic substrate. The photomask PM includes a light transmission region facing the openings 10 of the spacer SP and a light blocking region facing the barrier ribs of the spacer SP. When the exhaustion recesses 12 are formed to form an exhaustion path in the barrier ribs of the spacer SP, the photomask PM may be selected as a half-tone mask. The half-tone mask includes a light transmission region facing the openings 10 of the spacer SP, a light blocking region facing the barrier ribs of the spacer SP, and a half-tone transmission region facing the exhaustion recesses 12.

Subsequently, in the method for fabricating the spacer SP, the photoresist PR is exposed through the photomask PM and then developed to form a photoresist pattern PRP on the substrate GLS (S33).

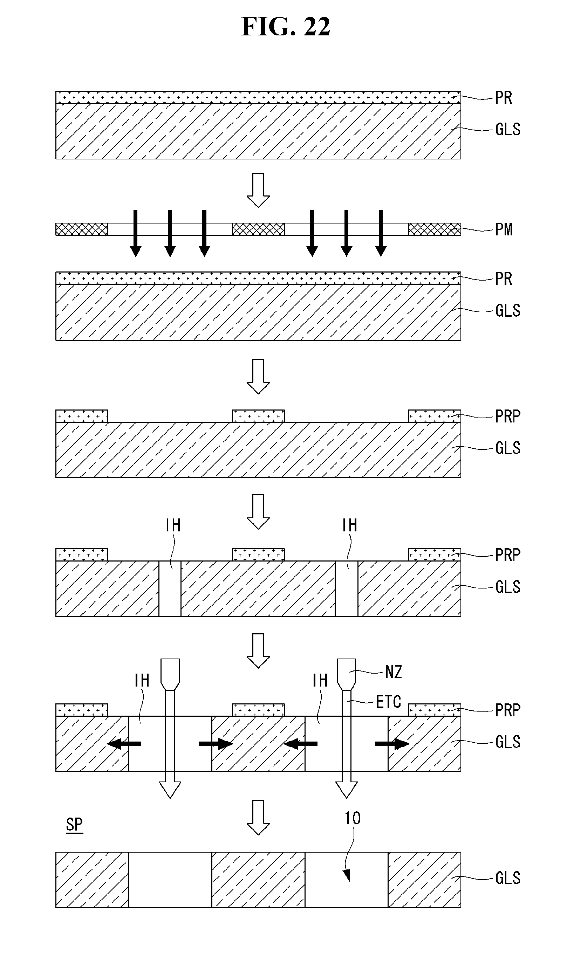

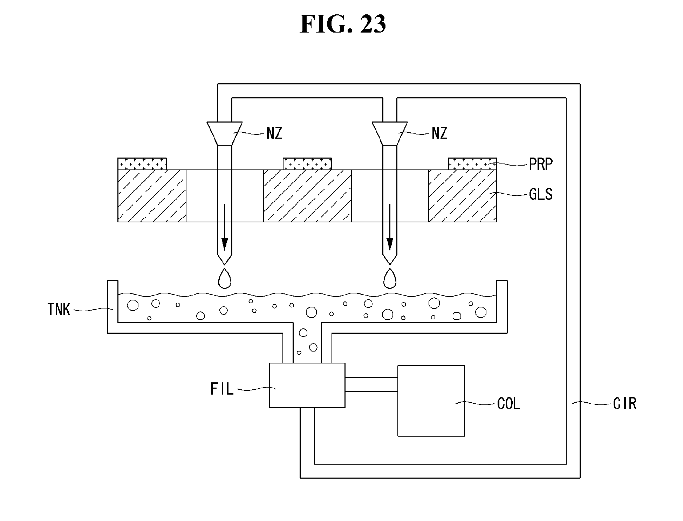

And then, in the method for fabricating the spacer SP, the substrate GLS is etched by using an anisotropic etching method. A dry etching method such as a plasma etching method, or an anisotropic wet etching method may be employed as the anisotropic etching method. In the dry etching method, reactive gases for etching the substrate GLS may include HF₆, NF₃, HCl₄, HNO₃, and the like. In the wet etching method, an etchant for etching the substrate GLS may include an HF solution, a BHF solution, and the like. As the wet etching method, the known anisotropic wet etching method may be applied, or a wet etching method illustrated in FIGS. 22 and 23 newly developed by the applicant of the present application may be applied. In this etching method, an etching ratio in a thicknesswise direction (or vertical direction) of the substrate GLS is higher than in a surface direction (or horizontal direction) of the substrate GLS. Thus, the substrate GLS is more etched vertically in portions other than the photoresist pattern PRP during the anisotropic etching process. When the etching process is completed, the photoresist pattern PRP is removed in a strip process (S34).

When the spacer SP is completed through steps S31 to S34 (S35), glass frit FR is applied to the previously fabricated upper and lower plates, and the spacer SP is aligned on the glass frit FR. In this state, when the glass frit FR is sintered, the upper and lower plates of the display panel are bonded through the glass frit FR and the spacer SP (S36). Step S36 in which the spacer SP is bonded to the upper and lower plates may be performed within the vacuum chamber having a vacuum degree of about 10⁻⁵ ∼ 10⁻⁷ torr. The vacuum chamber is heated to have a temperature ranging from about 400°C ∼ 500°C at which glass frit can be sintered. In the present embodiment, the spacer SP is aligned on the upper and lower plates such that an alignment key formed on the spacer SP is consistent with an alignment key formed on at least any one of the upper and lower plates with the glass frit FR applied thereto. The aligned spacer SP, upper and lower plates are loaded to the interior of the heated vacuum chamber, fixed and then maintained for a certain period of time. Then, the glass frit is sintered and the spacer SP is firmly bonded to the upper and lower plates.

In the present embodiment, the same glass substrate or ceramic substrate as that of the upper and lower plates is used as a material of the spacer, so it is easy to develop and select glass frit for vacuum sealing. Also, in the present embodiment, the spacer is fabricated by using the MEMS processing technique or the wet etching technique, the spacer SP which has high precision and high resolution and is highly fine can be precisely fabricated at low costs. The openings of the spacer SP has a diameter equal to or less than 50, 000 µm².

FIG. 22 is a sectional view showing an example of an anisotropic wet etching method. The method for fabricating the spacer is performed by a wet etching device illustrated in FIG. 23.

With reference to FIGS. 22 and 23, in the anisotropic wet etching method according to an embodiment of the present invention, fine holes IH penetrating the substrate GLS are formed by irradiating a laser beam to the substrate GLS through the exposed portions (opening portions) not covered by the photoresist pattern PPR, or by using a mechanical machining method or the existing photolithography process and etching method. The fine holes IH have a diameter smaller than that of the openings 10 of the spacer SP illustrated in FIG. 2.

Subsequently, nozzles NZ are aligned in the fine holes IH, and an etchant ETC is jetted into the fine holes IH through the nozzles NZ. The etchant ETC injected into the fine holes IH flows down through the fine holes IH and is discharged to the outside, etching side walls of the fine holes IH to increase the size of the fine holes IH. The etchant ETC is simultaneously jetted into the plurality of neighboring fine holes IH. In FIGS. 22 and 23, the nozzles NZ are expressed to have a size smaller than the real size. When the etchant is jetted through the nozzles NZ, the photoresist pattern PRP protects the substrate GLS against the etchant ETC to define the size and shape of the openings 10 exposed to the etchant ETC. When the etching process is completed, the photoresist pattern PRP is removed in a strip process. The thusly completed spacer SP is bonded to the previously fabricated upper and lower plates through glass frit powder.

As shown in FIG. 23, the etchant ETC is collected along with substrate particles etched through the fine holes IH by a collecting container TNK and then filtered through a filter FIL to remove a foreign material contained therein. And then, the etchant ETC is supplied to the nozzle NZ through a circulation pipe CIR so as to be recycled. The substrate particles filtered by the filter FIL are supplied to a collector COL so as to be recycled in fabricating a substrate. Accordingly, the etching system illustrated in FIG. 23 can minimize a waste of materials, thus implementing an environmentally friendly spacer fabrication process.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A field emission display (FED) including an upper plate including an anode electrode and a phosphor formed on an upper substrate, a lower plate facing the upper plate with a vacuum space gap interposed therebetween and including a plurality of thin film patterns formed on a lower substrate, and a spacer disposed between the upper plate and the lower plate to maintain the vacuum space gap, wherein
the lower plate comprises:
a cathode electrode including one or more of metals among molybdenum (Mo), aluminum (Al), copper (Cu), chromium (Cr), and an alloy thereof and formed on the substrate;
a diffusion blocking layer including any one or a mixture of titanium (Ti), tungsten (W), and tantalum (Ta), an alloy thereof, silicon, and a silicon compound and formed on the cathode electrode;
a seed metal layer formed on the diffusion blocking layer by using any one of nickel (Ni) and iron (Fe) and including granulated grains;
carbon nano-tubes (CNTs) grown as single crystals from the grains of the seed metal layer;
a gate insulating layer formed on the substrate on which the cathode electrode, the diffusion blocking layer, and the seed metal layer are formed, in order to cover the CNTs; and
a gate electrode including one or more metals among molybdenum (Mo), aluminum (Al), copper (Cu), chromium (Cr), and an alloy thereof and formed on the gate insulating layer,
wherein upper ends of the CNTs may be exposed through gate holes in the gate electrode.

2. The field emission display of claim 1, wherein when the diffusion blocking layer is made of any one of silicon (Si) and a silicon compound and formed between the cathode electrode and the gate electrode, the seed metal layer includes nickel silicide.

3. The field emission display of claim 1, wherein the pattern in which the diffusion blocking layer and the seed metal layer are stacked is formed only under the gate holes.

4. The field emission display of claim 1, wherein the pattern in which the diffusion blocking layer and the seed metal layer are stacked is formed in a pixel region including the gate holes and neighboring regions.

5. The field emission display of claim 1, wherein the cathode electrode has a thickness ranging from 1000Å to 4000Å,
the diffusion blocking layer has a thickness ranging from 400Å to 4000Å,
the seed metal layer has a thickness ranging from 50Å to 400Å,
the CNTs has a height ranging from 2µm to 20µm,
the gate insulating layer has a thickness ranging from 0.2µm to 20µm,
the gate electrode has a thickness ranging from 1000Å to 4000Å, and
the permittivity of the CNT bundle portion where CNTs cluster together by the gate insulating layer covering the CNTs and that of the portion without the CNTs in the vicinity of the CNT bundle range from 2 to 8 which are substantially the same.

6. The field emission display of claim 1, wherein the upper end of the gate insulating layer is removed by a depth of 1/2 or smaller over the thickness of the gate insulating layer under the gate holes, and the uppermost ends of the CNTs are positioned below the surface of the thickest portion of the gate insulating layer.

7. The field emission display of claim 1, wherein the CNTs have any one of a conical structure and a cylindrical structure and are vertically stood on the seed metal layer.

8. The field emission display of claim 1, wherein the spacer uses any one of glass and ceramic as a main ingredient and includes openings disposed in a matrix form, and the pitch between the openings of the spacer is substantially equal to the pitch of pixels or subpixels disposed in a matrix form on the lower plate.

9. The field emission display of claim 8, wherein the upper plate, the lower plate, and the spacer are made of the same material.

10. The field emission display of claim 8, wherein the spacer comprises:
barrier ribs demarcating the openings; and
exhaustion recesses formed to have a certain depth in the barrier ribs and forming an exhaustion path.

11. A method for fabricating a field emission display (FED) including an upper plate including an anode electrode and a phosphor formed on an upper substrate, a lower plate facing the upper plate with a vacuum space gap interposed therebetween and including a plurality of thin film patterns formed on a lower substrate, and a spacer disposed between the upper plate and the lower plate to maintain the vacuum space gap, wherein
a method for fabricating the lower plate comprises:
forming a cathode electrode including one or more of metals among molybdenum (Mo), aluminum (Al), copper (Cu), chromium (Cr), and an alloy thereof on the substrate and patterning the cathode electrode;
forming a diffusion blocking layer including any one of titanium (Ti), tungsten (W), and tantalum (Ta), an alloy thereof, silicon, and a silicon compound and formed on the cathode electrode, and forming a seed metal layer including any one of nickel (Ni) and iron (Fe) on the diffusion blocking layer;
patterning the diffusion blocking layer and the seed metal layer;
inputting the substrate including the cathode electrode, the diffusion blocking layer, and the seed metal layer into a chamber of DC PECVD equipment, heating the substrate to have a temperature ranging from 350°C to 600°C, and applying plasma energy ranging from 2W/cm³ to 40 W/cm³ to the interior of the chamber to form granulated grains on the seed metal layer;
supplying a CNT synthesis raw material gas including hydrocarbon and a dry etching reactive gas including at least any one of ammonia (NH₃), carbon tetrachloride (CCl₄), tetrafluoremethane (CF₄), and nitrogen trifluoride (NF₃) to the interior of the chamber in a state in which the substrate is maintained at the temperature ranging from 350°C to 600°C and the plasma energy within the chamber is maintained at a level ranging from 2W/cm³ to 40W/cm³, to grow CNTs as single crystals on the grains of the seed metal layer;
forming a gate insulating layer including any one of an organic insulating material and an inorganic insulating material on the substrate on which the cathode electrode, the diffusion blocking layer, and the seed metal layer are formed, to bury the CNTs therein; and
forming a gate electrode including one or more of metals among molybdenum (Mo), aluminum (Al), copper (Cu), chromium (Cr), and an alloy thereof on the gate insulating layer, and patterning the gate electrode to form gate holes exposing uppermost ends of the CNTs.

12. The method of claim 11, wherein the growing of the CNTs to have a single crystalline structure comprises alternately supplying the CNT synthesis raw material gas and the dry etching reactive gas to the interior of the chamber at certain time intervals.

13. The method of claim 11, wherein the growing of the CNTs to have a single crystalline structure comprises simultaneously supplying the CNT synthesis raw material gas.

14. The method of claim 11, further comprising:
etching the CNTs protruded from the gate insulating layer such that the uppermost ends of the CNTs are positioned to be lower than a surface of the thickest portion of the gate insulating layer, after the gate insulating layer is formed;
additionally coating a second gate insulating layer having a thickness ranging from about 1000Å to 10 µm on the gate insulating layer to completely cover the CNTs; and
removing an upper end portion of the gate insulating layer positioned under the gate holes by a depth of 1/2 over the thickness of the gate insulating layer by using the gate electrode and the gate holes as masks.

15. The method of claim 11, wherein the cathode electrode has a thickness ranging from 1000Å to 4000Å,
the diffusion blocking layer has a thickness ranging from 400Å to 4000Å,
the seed metal layer has a thickness ranging from 50Å to 400Å,
the CNTs has a height ranging from 2µm to 20µm,
the gate insulating layer has a thickness ranging from 0.2µm to 20µm,
the gate electrode has a thickness ranging from 1000Å to 4000Å, and
the permittivity of the CNT bundle portion where CNTs cluster together by the gate insulating layer covering the CNTs and that of the portion without the CNTs in the vicinity of the CNT bundle range from 2 to 8 which are substantially the same.

16. The method of claim 11, wherein the patterning of the diffusion blocking layer and the seed metal layer comprises:
applying photoresist to the seed metal layer and performing a photolithography process to form a photoresist pattern on the seed metal layer, and patterning the diffusion blocking layer and the seed metal layer.

17. The method of claim 16, wherein the growing of the CNTs to have a single crystalline structure comprises:
growing the CNTs to have a single crystalline structure on the seed metal layer in a state in which the photoresist pattern remains.

18. The method of claim 11, wherein the spacer uses any one of glass and ceramic as a main ingredient and includes openings disposed in a matrix form, and the pitch between the openings of the spacer is substantially equal to the pitch of pixels or subpixels disposed in a matrix form on the lower plate.

19. The method of claim 18, wherein the upper plate, the lower plate, and the spacer are made of the same material.

20. The method of claim 18, wherein the spacer comprises:
barrier ribs demarcating the openings; and
exhaustion recesses formed to have a certain depth in the barrier ribs and forming an exhaustion path.
